# EUROPEAN PATENT APPLICATION

(11) **EP 2 570 794 A2**
(43) Date of publication of application: **20.03.2013**
(21) Application number: 12184971.5
(22) Date of filing: 19.09.2012
(51) Int. Cl.: G01N 3/56

(54) **Thermal-mechanical wear testing for pdc shear cutters**

(30) Priority: 19.09.2011 US 201161536368 P
(71) Applicant: Varel International, Ind., L.P., Carrollton, TX 75006 (US)
(72) Inventor: Bellin, Federico, The Woodlands, TX Texas 77381 (US)
(74) Representative: Smee, Anthony James Michael

(57) **Abstract**

A method and apparatus for testing the abrasive wear resistance of PDC cutters or other superhard materials are disclosed. The method includes obtaining a first cutter having a first substrate and a first cutting table coupled thereto and obtaining a second cutter having a second substrate and a second cutting table coupled thereto. The method also includes positioning a surface of the first cutting table in contact with a surface of the second cutting table. The method also includes rotating at least one of the first cutters and the second cutters where at least a portion of the first and/or second cutting tables is removed. The method includes determining the amount of first and/or second cutting table removed. The apparatus includes a first holder coupled to the first cutter and a second holder coupled to the second cutter, where at least one holder rotates circumferentially.

## Description

### CROSS-REFERENCE TO RELATED APPLICATIONS

This application claims priority under 35 U.S.C. § 119 to United States Provisional Patent Application No. 61/536,368, titled "Thermal-Mechanical Wear testing For PDC Shear Cutters," filed September 19, 2011, the disclosure of which is incorporated by reference herein.

The present application is related to U.S. patent application serial no. 61/536,336, entitled "Attachment of Thermally Stable Polycrystalline to a Substrate and Compacts Constructed" and filed on September 19, 2011, the disclosure of which is incorporated by reference herein.

### TECHNICAL FIELD

The present invention relates generally to a method and apparatus for testing PDC cutters or other superhard components; and more particularly, to a method and apparatus for testing the abrasive wear resistance of PDC cutters or other superhard components.

### BACKGROUND

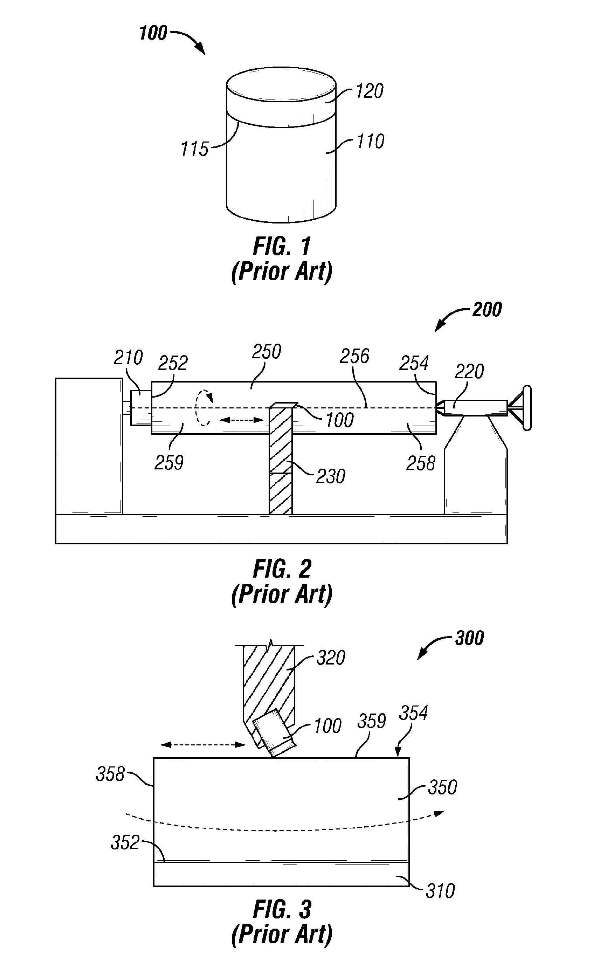

Figure 1 shows a superhard component 100 that is insertable within a downhole tool (not shown) in accordance with an exemplary embodiment of the invention. One example of a superhard component 100 is a cutting element 100, or cutter, for rock bits. The cutting element 100 typically includes a substrate 110 having a contact face 115 and a cutting table 120. The cutting table 120 is fabricated using an ultra hard layer which is bonded to the contact face 115 by a sintering process, or by some other known process. The substrate 110 is generally made from tungsten carbide-cobalt, or tungsten carbide, while the cutting table 120 is formed using a polycrystalline ultra hard material layer, such as polycrystalline diamond ("PCD"), polycrystalline cubic boron nitride ("PCBN"), or tungsten carbide mixed with diamond crystals (impregnated segments). The cutting table 120 can be thermally stable in some examples. These cutting elements 100 are fabricated according to processes and materials known to persons having ordinary skill in the art. The cutting element 100 is referred to as a polycrystalline diamond compact ("PDC") cutter when PCD is used to form the cutting table 120. PDC cutters are known for their toughness and durability, which allow them to be an effective cutting insert in demanding applications. Although one type of superhard component 100 has been described, other types of superhard components 100, such as natural or synthetic rock, can be utilized.

Common problems associated with these cutters 100 include abrasion, graphitization, heat checking, thermal cracking, and premature wear of the cutting table 120. These problems result in the early failure of the cutting table 120. Typically, high temperatures generated on the cutting table 120 at the region where the cutting table 120 makes contact with earthen formations during drilling can cause these problems. These problems increase the cost of drilling due to costs associated with repair, production downtime, and labor costs. For these reasons, testing methods have been developed to ascertain the abrasion resistance of cutters 100 so that improved cutter longevity is achieved and the problems mentioned above are substantially reduced.

Superhard components 100, which include PDC cutters 100, have been tested for abrasive wear resistance through the use of two conventional testing methods. Early in the development of PDC materials, the abrasive wear resistance was tested using a conventional granite log test, which is described in further detail with respect to Figure 2. However, as the PDC cutters 100 became more wear resistant and too much time and conventional target cylinders 250 (Figure 2) were required to complete the conventional granite log test, the conventional vertical turret lathe ("VTL") test, which is described in further detail with respect to Figure 3, replaced the conventional granite log test for testing abrasive wear resistance.

Figure 2 shows a lathe 200 for testing abrasive wear resistance of a superhard component 100 using a conventional granite log test. Although one exemplary apparatus configuration for the lathe 200 is provided, other apparatus configurations can be used without departing from the scope and spirit of the exemplary embodiment. Referring to Figure 2, the lathe 200 includes a chuck 210, a tailstock 220, and a tool post 230 positioned between the chuck 210 and the tailstock 220. A conventional target cylinder 250 has a first end 252, a second end 254, and a sidewall 258 extending from the perimeter of the first end 252 to the perimeter of the second end 254. According to the conventional granite log test, sidewall 258 is an exposed surface 259 which makes contact with the superhard component 100 during the test. The first end 252 is coupled to the chuck 210, while the second end 254 is coupled to the tailstock 220. The chuck 210 is configured to rotate, thereby causing the conventional target cylinder 250 to also rotate along a central axis 256 of the conventional target cylinder 250. The tailstock 220 is configured to hold the second end 254 in place while the conventional target cylinder 250 rotates. The conventional target cylinder 250 is fabricated from a single uniform material, which is typically a natural rock type, such as granite, or concrete. Other single uniform rock types have been used for the conventional target cylinder 250, which includes, but is not limited to, Jackfork sandstone, Indiana limestone, Berea sandstone, Carthage marble, Champlain black marble, Berkley granite, Sierra white granite, Texas pink granite, and Georgia gray granite. Alternatively, the conventional target cylinder 250 is fabricated from a manmade material, a combination of man-made and natural materials, or a combination of different natural materials. The conventional target cylinder 250 has a compressive strength of about 25,000 pounds per square inch ("psi") or less and an abrasiveness of about six CAI or less when natural rock types are used. These conventional target cylinders 250 fabricated from natural rock types are costly to acquire, shape, ship, and handle. The conventional target cylinder 250 has a compressive strength of about 12,000 psi or less and an abrasiveness of about two CAI or less when concrete is used.

The PDC cutter 100 is fitted to the lathe's tool post 230 so that the PDC cutter's cutting table 120 makes contact with the conventional target cylinder's exposed surface 259 and drawn back and forth across the exposed surface 259. The tool post 230 has an inward feed rate on the conventional target cylinder 250. The operating conditions during the test can be varied, for example, the depth of cut can be varied, the feed rate can be varied, different cooling fluids can be used, and the rake angle can be changed.

The abrasive wear resistance for the PDC cutter 100 is determined as a wear ratio, which is defined as the volume of conventional target cylinder 250 that is removed to the volume of the PDC cutter's cutting table 120 that is removed. This wear ratio can be referred to as a grinding ratio ("G-Ratio"). Common values of the G-Ratio range from about 1,000,000/1 to 15,000,000/1 depending on the abrasiveness of the conventional target cylinder and the PDC cutter. Alternatively, instead of measuring volume of rock removed, the distance that the PDC cutter 100 travels across the conventional target cylinder 250 can be measured and used to quantify the abrasive wear resistance for the PDC cutter 100. Common values of the travelling distance range from about 15,000 feet to about 160,000 feet depending on the abrasiveness of the conventional target cylinder and the PDC cutter. Alternatively, other methods known to persons having ordinary skill in the art can be used to determine the wear resistance using the conventional granite log test. Operation and construction of the lathe 200 is known to people having ordinary skill in the art. Descriptions of this type of test is found in the Eaton, B.A., Bower, Jr., A.B., and Martis, J.A. "Manufactured Diamond Cutters Used In Drilling Bits." Journal of Petroleum Technology, May 1975, 543-551. Society of Petroleum Engineers paper 5074-PA, which was published in the Journal of Petroleum Technology in May 1975, and also found in Maurer, William C., Advanced Drilling Techniques, Chapter 22, The Petroleum Publishing Company, 1980, pp. 541-591, which is incorporated by reference herein.

As previously mentioned, this conventional granite log test was adequate during the initial stages of PDC cutter 100 development. However, PDC cutters 100 have become more resistant to abrasive wear as the technology for PDC cutters 100 improved. Current technology PDC cutters 100 are capable of cutting through many conventional target cylinders 250 without ever developing any appreciable and measurable wear flat. Additionally, these tests generally last at least several hours, or even days, before a significant amount of wear on the PCD is detected. For these reasons, the conventional granite log test method is inefficient and too costly for measuring the abrasive wear resistance of superhard components 100. Also, for this reason, testing is generally limited to very few samples, if not only one sample, and therefore it is impossible to make any assessments of the consistency of the product being tested.

Figure 3 shows a vertical turret lathe 300 for testing abrasive wear resistance of a superhard component 100 using a conventional vertical turret lathe ("VTL") test. Although one exemplary apparatus configuration for the VTL 300 is provided, other apparatus configurations can be used without departing from the scope and spirit of the exemplary embodiment. The vertical turret lathe 300 includes a rotating table 310 and a tool holder 320 positioned above the rotating table 310. A conventional target cylinder 350 has a first end 352, a second end 354, and a sidewall 358 extending from the perimeter of the first end 352 to the perimeter of the second end 354. According to the conventional VTL test, second end 354 is an exposed surface 359 which makes contact with a superhard component's cutting table 120 during the test. Specifically, the superhard component's cutting table 120 is positioned at an angle to the second end 354 such that a portion of the perimeter of the cutting table 120 makes contact with the second end 354. The conventional target cylinder 350 is typically about thirty inches to about sixty inches in diameter, but can be smaller or larger depending upon the testing requirements. The conventional target cylinder 350 is typically larger in diameter than the conventional target cylinder 250 (Figure 2).

The first end 352 is mounted on the lower rotating table 310 of the VTL 300, thereby having the exposed surface 359 face the tool holder 320. The PDC cutter 100 is mounted in the tool holder 320 above the conventional target cylinder's exposed surface 359 and makes contact with the exposed surface 359. The conventional target cylinder 350 is rotated via the rotating table 310 as the tool holder 320 cycles the PDC cutter 100 from the center of the conventional target cylinder's exposed surface 359 out to its edge and back again to the center of the conventional target cylinder's exposed surface 359. The tool holder 320 has a predetermined downward feed rate.

The VTL 300 is generally a larger machine when compared to the lathe 200 (Figure 2) used for the conventional granite log test. The conventional VTL test allows for larger depths of cut to be made in the conventional target cylinder 350 and for the use of a larger conventional target cylinder 350 when compared to the depths of cut made and the size of the conventional target cylinder 250 (Figure 2) used in the conventional granite log test. The capability of having larger depths of cut allows for higher loads to be placed on the PDC cutter 100. Additionally, the larger conventional target cylinder 350 provides for a greater rock volume for the PDC cutter 100 to act on and hence a longer duration for conducting the test on the same conventional target cylinder 350. Thus, fewer conventional target cylinders 350 are used when performing the conventional VTL test when compared to the number of conventional target cylinders 250 (Figure 2) that are used in the conventional granite log test. The conventional target cylinder 350 is typically fabricated entirely from granite; however, the conventional target cylinder can be fabricated entirely from another single uniform natural material that includes, but is not limited to, Jackfork sandstone, Indiana limestone, Berea sandstone, Carthage marble, Champlain black marble, Berkley granite, Sierra white granite, Texas pink granite, and Georgia gray granite, or concrete. Alternatively, the conventional target cylinder 350 is fabricated from a manmade material, a combination of man-made and natural materials, or a combination of different natural materials. The conventional target cylinder 350 has a compressive strength of about 25,000 psi or less and an abrasiveness of about six CAI or less when natural rock types are used. As previously mentioned, these conventional target cylinders 350 fabricated from natural rock types are costly to acquire, shape, ship, and handle. The conventional target cylinder 350 has a compressive strength of about 12,000 psi or less and an abrasiveness of about two CAI or less when concrete is used.

The abrasive wear resistance for the PDC cutter 100 is determined as a wear ratio, which is defined as the volume of conventional target cylinder 350 that is removed to the volume of the PDC cutter 100 that is removed. This wear ratio can be referred to as a grinding ratio ("G-Ratio"). Common values of the G-Ratio range from about 1,000,000/1 to about 15,000,000/1 depending on the abrasiveness of the conventional target cylinder and the PDC cutter. Alternatively, instead of measuring volume of rock removed, the distance that the PDC cutter 100 travels across the conventional target cylinder 350 can be measured and used to quantify the abrasive wear resistance for the PDC cutter 100. Common values of the travelling distance range from about 15,000 feet to about 160,000 feet depending on the abrasiveness of the conventional target cylinder and the PDC cutter.

Although the conventional target cylinder 350, when used in the VTL 300, is able to handle larger depths of cuts and increased loads compared to the conventional target cylinder 250 (Figure 2) used in the lather 200 (Figure 2), the VTL tests have similar issues as the granite log tests. For example, current technology PDC cutters 100 are capable of cutting through several conventional target cylinders 350 before completing the test. Additionally, these tests generally last at least several hours, or even days, before a significant amount of wear on the PCD is detected. For these reasons, the conventional VTL test method is inefficient and too costly for measuring the abrasive wear resistance of superhard components 100. Also, for this reason, testing is generally limited to very few samples, if not only one sample, and therefore it is impossible to make any assessments of the consistency of the product being tested.

### BRIEF DESCRIPTION OF THE DRAWINGS

The foregoing and other features and aspects of the invention are best understood with reference to the following description of certain exemplary embodiments, when read in conjunction with the accompanying drawings, wherein:

Figure 1 is a perspective view of a superhard component that is insertable within a downhole tool in accordance with an exemplary embodiment of the invention;

Figure 2 is a side view of a lathe for testing abrasive wear resistance of a superhard component using a conventional granite log test;

Figure 3 is a side view of a vertical turret lathe for testing abrasive wear resistance of a superhard component using a conventional vertical turret lathe test;

Figure 4 is a perspective view of an abrasion testing device in accordance with an exemplary embodiment of the present invention;

Figure 5 is a cross-sectional view depicting the relationship of a first cutter in contact with a second cutter when inserted into the abrasion testing device of Figure 4 in accordance with a second exemplary embodiment;

Figure 6 is a cross-sectional view depicting the relationship of a first cutter in contact with a second cutter when inserted into the abrasion testing device of Figure 4 in accordance with a third exemplary embodiment;

Figure 7 is a cross-sectional view depicting the relationship of a first cutter in contact with a second cutter when inserted into the abrasion testing device of Figure 4 in accordance with a fourth exemplary embodiment; and

Figure 8 is a side view of the abrasion testing device of Figure 4 disposed within a control chamber in accordance with an exemplary embodiment of the present invention.

The drawings illustrate only exemplary embodiments of the invention and are therefore not to be considered limiting of its scope, as the invention may admit to other equally effective embodiments.

### BRIEF DESCRIPTION OF EXEMPLARY EMBODIMENTS

The present invention is directed to a method and apparatus for testing the abrasive wear resistance of superhard components. Although the description of exemplary embodiments is provided below in conjunction with a PDC cutter, alternate embodiments of the invention may be applicable to other types of superhard components including, but not limited to, PCBN cutter, thermally stable cutters, or other superhard components known or not yet known to persons having ordinary skill in the art. The invention is better understood by reading the following description of non-limiting, exemplary embodiments with reference to the attached drawings, wherein like parts of each of the figures are identified by like reference characters, and which are briefly described as follows.

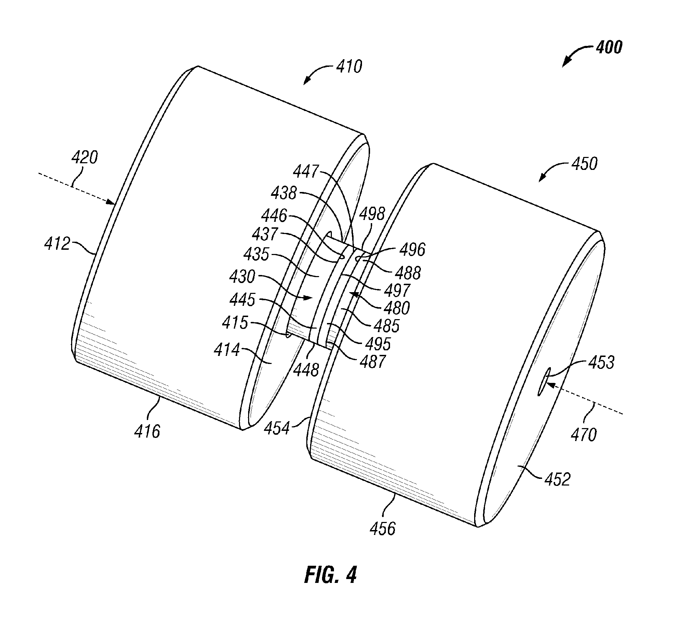

Figure 4 is a perspective view of an abrasion testing device 400 in accordance with an exemplary embodiment of the present invention. Referring to Figure 4, the abrasion testing device 400 includes a first holder 410 and a second holder 450. However, in other exemplary embodiments, the abrasion testing device 400 includes greater, fewer, or different components, such as a collet (not shown), that allows the abrasion testing device 400 to perform wear resistance testing as described below.

The first holder 410 is cylindrically shaped and includes a first end 412, a second end 414, and a sidewall 416 extending from the perimeter of the first end 412 to the perimeter of the second end 414. However, in other exemplary embodiments, the first holder 410 is shaped in a different geometric or non-geometric shape without departing from the scope and spirit of the exemplary embodiment. According to some exemplary embodiments, the first end 412 includes an opening (not shown) formed therein, similar to an opening 453 formed within the second holder 450, which extends towards the second end 414. The opening is circularly-shaped, but is shaped differently in other exemplary embodiments. The opening is positioned substantially in the center of the first end 412, but is positioned elsewhere on the first holder 410 in other exemplary embodiments. The opening allows for a device (not shown), which can be rotated in certain exemplary embodiments, to be inserted at least partially within the opening and cause the first holder 410 to rotate circumferentially. In other exemplary embodiments, the device maintains the first holder 410 stationary. This opening is formed during or subsequently after the fabrication of the first holder 410. For example, in certain exemplary embodiments, the opening is formed during the molding or casting process of the first holder 410. In alternative examples, the opening is formed using an etching process, a laser, or by drilling. This opening is optional in certain exemplary embodiments, especially when the first holder 410 is rotated or maintained stationary using other devices and methods that are known to persons having ordinary skill in the art and having the benefit of the present disclosure.

In certain exemplary embodiments, the second end 414 includes a cavity 415 formed therein, which extends towards the first end 412. The cavity 415 is circularly-shaped, but is shaped differently in other exemplary embodiments. The cavity 415 is positioned substantially in the center of the second end 414, but is positioned elsewhere on the first holder 410 in other exemplary embodiments. The cavity 415 is dimensioned to accommodate the insertion of at least a portion of a first cutter 430, which is described in further detail below. This cavity 415 is formed during or subsequently after the fabrication of the first holder 410. The first holder 410 is fabricated from steel; however, in other exemplary embodiments, the first holder 410 is fabricated from other known suitable materials, such as plastics, titanium, other metals, and/or metal alloys.

The second holder 450 is fabricated and/or shaped similarly to the first holder 410. The second holder 450 also is cylindrically shaped and includes a first end 452, a second end 454, and a sidewall 456 extending from the perimeter of the first end 452 to the perimeter of the second end 454. However, in other exemplary embodiments, the second holder 450 is shaped in a different geometric or non-geometric shape without departing from the scope and spirit of the exemplary embodiment. According to some exemplary embodiments, the first end 452 includes an opening 453 formed therein, similar to the opening formed within the first holder 410, which extends towards the second end 454. The opening 453 is circularly-shaped, but is shaped differently in other exemplary embodiments. The opening 453 is positioned substantially in the center of the first end 452, but is positioned elsewhere on the first holder 450 in other exemplary embodiments. The opening 453 allows for a device (not shown), which can be rotated in certain exemplary embodiments, to be inserted at least partially within the opening 453 and cause the second holder 450 to rotate circumferentially. In other exemplary embodiments, the device maintains the second holder 450 stationary. According to any of the exemplary embodiments, at least one of the first holder 410 and/or the second holder 450 is rotated circumferentially. This opening 453 is formed during or subsequently after the fabrication of the second holder 450. For example, in certain exemplary embodiments, the opening 453 is formed during the molding or casting process of the second holder 450. In alternative examples, the opening 453 is formed using an etching process, a laser, or by drilling. This opening 453 is optional in certain exemplary embodiments, especially when the second holder 450 is rotated or maintained stationary using other devices and methods that are known to persons having ordinary skill in the art and having the benefit of the present disclosure.

In certain exemplary embodiments, the second end 454 includes a cavity (not shown) formed therein, similar to cavity 415, which extends towards the first end 452. The cavity is circularly-shaped, but is shaped differently in other exemplary embodiments. The cavity is positioned substantially in the center of the second end 454, but is positioned elsewhere on the second holder 450 in other exemplary embodiments. The cavity is dimensioned to accommodate the insertion of at least a portion of a second cutter 480, which is described in further detail below. This cavity is formed during or subsequently after the fabrication of the second holder 450. The second holder 450 is fabricated from steel; however, in other exemplary embodiments, the second holder 450 is fabricated from other known suitable materials, such as plastics, titanium, other metals, and/or metal alloys.

In certain exemplary embodiments, the abrasion testing device 400 includes the first cutter 430 and the second cutter 480. The first cutter 430 is similar to cutting element 100 (Figure 1) and includes a substrate 435 and a cutting table 445 coupled to the substrate 435 according to methods known to persons having ordinary skill in the art. The substrate 435 is similar to substrate 110 (Figure 1) and includes a bottom surface (not shown), a top surface 437, and a sidewall 438 extending from the perimeter of the bottom surface to the perimeter of the top surface 437. The bottom surface is not illustrated since the bottom surface is inserted into the cavity 415. The bottom surface is planar in some exemplary embodiments, while in other exemplary embodiments, the bottom surface is non-planar. Similarly, the top surface 437 is planar in some exemplary embodiments, while in other exemplary embodiments, the top surface 437 is non-planar. The substrate 435 is formed from sintered metal-carbide, such as tungsten carbide. However, other metal-carbides, such as nickel-based carbides and molybdenum carbide, is used to form the substrate 435 without departing from the scope and spirit of the exemplary embodiments. The substrate 435 includes a tungsten carbide powder (not shown) and also a binder material (not shown), such as cobalt, in certain exemplary embodiments.

The cutting table 445 is similar to cutting table 120 (Figure 1) and includes a first surface 446, a second surface 447, and a cutting table sidewall 448 extending from the perimeter of the first surface 446 to the perimeter of the second surface 447. The first surface 446 is planar in some exemplary embodiments, while in other exemplary embodiments, the first surface 446 is non-planar. Similarly, the second surface 447 is planar in some exemplary embodiments, while in other exemplary embodiments, the second surface 447 is non-planar. For example, the second surface 447 includes a recess (not shown) formed therein which extends into the cutting table 445 towards the first surface 446 according to certain exemplary embodiments. The cutting table 445 is formed from polycrystalline diamond ("PCD") according to some exemplary embodiments. However, in other exemplary embodiments, the cutting table 445 is formed from other suitable materials, including cubic boron nitride ("CBN"). The cutting table 445 is formed by sintering individual diamond particles together under the high pressure and high temperature ("HPHT") conditions referred to as the "diamond stable region," which is typically above forty kilobars and between 1,200 degrees Celsius and 2,000 degrees Celsius, in the presence of a catalyst/solvent (not shown) which promotes diamond-diamond bonding. Some examples of catalyst/solvent typically used for sintering diamond compacts are cobalt, nickel, iron, and other Group VIII metals. The cutting table 445 usually has a diamond content greater than seventy percent by volume, with about eighty percent to about ninety-five percent being typical. The diamond content can be greater or lesser than this range in other exemplary embodiments.

When forming the first cutter 430, the cutting table's first surface 446 is coupled to, or bonded to, the substrate's top surface 437. In some exemplary embodiments, the coupling of the cutting table's first surface 446 to the substrate's top surface 437 occurs at the same time that the substrate 435 and the cutting table 445 is formed. For example, metal carbide powder and binder material is placed where the substrate 435 is to be formed, while the diamond powder is placed where the cutting table 445 is to be formed. The mixture is placed in an HPHT press. The substrate 435 is formed from the sintering of the metal carbide powder and binder material. The binder material within the substrate 435 infiltrates into the diamond powder and functions as the catalyst/solvent, thereby sintering the diamond powder and forming the cutting table 445. Hence, the cutter 430 also is formed. In some other exemplary embodiments, the substrate 435 is formed and the diamond powder is positioned on the substrate 435 where the cutting table 445 is to be formed. The mixture is placed in a HPHT press where the binder material in the substrate 435 melts and infiltrates into the diamond powder, thereby causing the sintering of the diamond powder. Once the process is completed, the cutting table 445 is formed and bonded to the substrate 435 and hence the cutter 430 is formed. In yet other exemplary embodiments, the substrate 435 and the cutting table 445 are both formed individually and thereafter coupled to one another using an HPHT press. While in the press, the binder material from the substrate 435 melts and infiltrates into the cutting table 445 and forms bonds between the cutting table's first surface 446 and the substrate's top surface 437. Although a few methods of forming the first cutter 430 have been described, other methods are used in other exemplary embodiments.

The second cutter 480 is fabricated similar to the first cutter 430 and includes a substrate 485 and a cutting table 495 coupled to the substrate 485. The substrate 485 is fabricated similarly to substrate 435 and includes a bottom surface (not shown), a top surface 487, and a sidewall 488 extending from the perimeter of the bottom surface to the perimeter of the top surface 487. The bottom surface is not illustrated since the bottom surface is inserted within the cavity formed within the second holder 450. The bottom surface is planar in some exemplary embodiments, while in other exemplary embodiments, the bottom surface is non-planar. Similarly, the top surface 487 is planar in some exemplary embodiments, while in other exemplary embodiments, the top surface 487 is non-planar. The cutting table 495 is fabricated similarly to cutting table 445 and includes a first surface 496, a second surface 497, and a cutting table sidewall 498 extending from the perimeter of the first surface 496 to the perimeter of the second surface 497. The first surface 496 is planar in some exemplary embodiments, while in other exemplary embodiments, the first surface 496 is non-planar. Similarly, the second surface 497 is planar in some exemplary embodiments, while in other exemplary embodiments, the second surface 497 is non-planar. For example, the second surface 497 includes a recess (not shown) formed therein which extends into the cutting table 495 towards the first surface 496 in certain exemplary embodiments.

Prior to operating the abrasion testing device 400, the first cutter 430 is coupled to the first holder 410 and the second cutter 480 is coupled to the second holder 450. In certain exemplary embodiments, a portion of the first cutter 430, which includes the substrate's bottom surface 436, is inserted into the first holder's cavity 415 and secured therein thereby having the cutting table's second surface 447 facing a direction away from the first holder's first end 412. In some exemplary embodiments, the cutting table's second surface 447 extends beyond the first holder's second end 414. According to some examples, the first cutter 430 is brazed to the first holder 410; however, in other exemplary embodiments, other suitable coupling methods, such as shrink fitting, is used to couple the first cutter 430 to the first holder 410.

Similarly, in certain exemplary embodiments, a portion of the second cutter 480, which includes the substrate's bottom surface, is inserted into the second holder's cavity and secured therein thereby having the cutting table's second surface 497 facing a direction away from the second holder's first end 452. In some exemplary embodiments, the cutting table's second surface 497 extends beyond the second holder's second end 454. According to some examples, the second cutter 480 is brazed to the second holder 450. However, in other exemplary embodiments, other suitable coupling methods, such as shrink fitting, is used to couple the second cutter 480 to the second holder 450. Although a first cutter 430 and a second cutter 480 are used in the exemplary embodiments, other exemplary embodiments use some other superhard material, or component, such as a natural or synthetic rock, in lieu of the first cutter 430 and/or the second cutter 480.

Once the first cutter 430 is coupled to the first holder 410 and the second cutter 480 is coupled to the second holder 450, the first holder 410 and the second holder 450 are oriented such that the first cutter's second surface 447 is positioned in contact with the second cutter's second surface 497. Thus, the cutting tables 445, 495 of each of the first cutter 430 and the second cutter 480 are in contact with one another. At least one of the first holder 410 and the second holder 450 is rotated to create a rapid frictional heating at the interface of where the cutting table 445 is in contact with the cutting table 495 during the wear resistance testing process. Also, at least during the rotation of at least one of the first holder 410 and the second holder 450, a first load 420 and/or a second load 470 is applied, either directly or indirectly, to at least one of the first cutter 430 and/or the second cutter 480, respectively, to at least ensure that the cutting table 445 of the first cutter 430 remains in contact with the cutting table 495 of the second cutter 480. The loads 420, 470 range from about two Newtons to about 2,500 Newtons. According to some exemplary embodiments, the loads 420, 470 range from about 500 Newtons to about 1,500 Newtons. In certain exemplary embodiments, one or more of the loads 420, 470 are applied onto the first holder 410 and/or the second holder 450 that is substantially normal to the first and second cutter's second surface 447, 497.

During the wear resistance testing process, the temperature of the interface between the cutting table 445 of the first cutter 430 and the cutting table 495 of the second cutter 480 is increased to a first temperature due to at least the frictional heat generated from the cutting table 445 sliding against the cutting table 495. This first temperature is constant in some exemplary embodiments, while it is varied in other exemplary embodiments depending upon user preferences for the test. The cutting tables 445, 495 experience shear stresses on their respective second surfaces 447, 497 caused by the friction forces between the sliding second surfaces 447, 497 and high levels of temperature at the contact points. The combination of thermal and mechanical loads cause the cutting tables 445, 495 to degrade and abrade away. As one or more of the cutting tables 445,495 degrade and abrade away, one or more of the first and second cutters 430, 480 become axially displaced in a direction towards the other cutter 430, 480. This axial displacement is monitored, which provides a measurement to the amount of PCD, or cutting table 445, 495, that is removed. The amount of PCD, or cutting table 445, 495, that is removed is then compared to the time taken to remove that amount of material in determining the wear resistance properties. Alternatively, other methods, such as directly measuring the volume and/or mass of the removed cutting table 445, 495, can be used in other exemplary embodiments.

In certain exemplary embodiments of the wear resistance testing process described above, only the first holder 410 rotates, while the second holder 450 is substantially static. In another exemplary embodiment, only the second holder 450 rotates, while the first holder 410 is substantially static. In yet another exemplary embodiment, the first holder 410 and the second holder 450 both rotate, but the first holder 410 rotates in an opposite direction than the direction in which the second holder 450 rotates. In a further exemplary embodiment, the first holder 410 and the second holder 450 both rotate in the same direction, but one of the first holder 410 or the second holder 450 rotates faster than the other holder 410, 450. Although it is mentioned that at least one of the holders 410, 450 is rotated, it can be that at least one of the first cutter 430 and the second cutter 480 is rotated in lieu of the respective holders 410, 450.

The rotational differential between the first cutter 430 and the second cutter 480, or between the first holder 410 and the second holder 450, for at least a portion of the wear resistance testing process ranges from about 200 revolutions per minute ("RPM") to about 7,000 RPM. In certain other exemplary embodiments, the rotational differential ranges between about 2,000 RPM to about 5,500 RPM. According to certain exemplary embodiments, the rotation of at least one of the first cutter 430 and the second cutter 480 is performed increasingly in a step-up process and decreasingly in a step-down process. According to certain other exemplary embodiments, the rotation of at least one of the first cutter 430 and the second cutter 480 is performed increasingly in a continuous manner and decreasingly in a continuous manner. According to yet other exemplary embodiments, the rotation of at least one of the first cutter 430 and the second cutter 480 is performed increasingly in a combination of manners, for example, a step-up process and a continuous manner, and decreasingly in a combination of manners. Further, the rotation of at least one of the first cutter 430 and the second cutter 480 is varied between increasing and decreasing rotational speeds. In yet a further exemplary embodiment, the rotational difference between the first cutter 430 and the second cutter 480 during the wear resistance testing process is substantially constant.

In some exemplary embodiments, one or more of the first holder 410 and the second holder 450 are in rotation prior to the cutting table 445 of the first cutter 430 being brought into contact with the cutting table 495 of the second cutter 480. In other exemplary embodiments, the cutting table 445 of the first cutter 430 is brought into contact with the cutting table 495 of the second cutter 480 prior to any of the holders 410, 450 being put into rotation.

In certain exemplary embodiments of the wear resistance testing process described above, the first load 420 is applied to the first holder's first end 412. In another exemplary embodiment, the second load 470 is applied onto the second holder's first end 452. In yet another exemplary embodiment, the first load 420 is applied onto the first holder's first end 412 and the second load 470 is applied onto the second holder's first end 452. The apparatus and methods for providing the loads 420, 470 and the rotations of the first cutter 430 and/or the second cutter 480 are known to people having ordinary skill in the art having the benefit of the present disclosure and will not be discussed in detail herein for the sake of brevity. In certain exemplary embodiments, one or more steps in the wear resistance testing process, such as the rotation of the first cutter 430 and/or the second cutter 480 or the applied loads 420, 470, are controlled and operated by a computer (not shown).

In certain exemplary embodiments, the wear resistance testing process is performed by maintaining the temperature at the interface between the cutting table 445 of the first cutter 430 and the cutting table 495 of the second cutter 480 substantially constant, while monitoring the rotational difference between the first cutter 430 and the second cutter 480 and by monitoring the first load 420 and/or the second load 470. In certain other exemplary embodiments, the wear resistance testing process is performed by maintaining the rotational difference between the first cutter 430 and the second cutter 480 substantially constant, while monitoring the temperature at the interface between the cutting table 445 of the first cutter 430 and the cutting table 495 of the second cutter 480 and by monitoring the first load 420 and/or the second load 470. In certain other exemplary embodiments, the wear resistance testing process is performed by maintaining the sum of the first load 420 and the second load 470 substantially constant, while monitoring the temperature at the interface between the cutting table 445 of the first cutter 430 and the cutting table 495 of the second cutter 480 and by monitoring the rotational difference between the first cutter 430 and the second cutter 480. In yet other exemplary embodiments, the wear resistance testing process is performed using a combination of methods described above where all three variables, rotational difference, load sum, and temperature, are varied or at least two of the variables are kept constant. Different combinations of axial load and torque for the same level of input power can be chosen based upon testing desires. If the temperature effect is the testing interest, the wear test is performed at high RPM and low axial load according to certain exemplary embodiments. The opposite configuration is chosen in certain exemplary embodiments if high shear stresses are to be applied at lower temperature values.

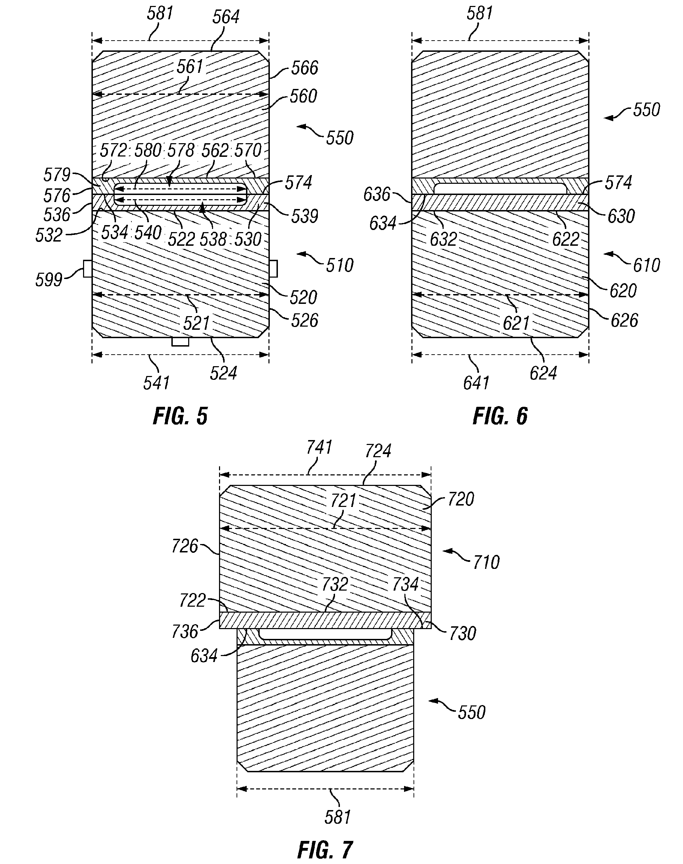

Figure 5 is a cross-sectional view depicting the relationship of a first cutter 510 in contact with a second cutter 550 when inserted into the abrasion testing device 400 (Figure 4) in accordance with a second exemplary embodiment. Referring to Figure 5, the first cutter 510 is positioned in contact with the second cutter 550.

The first cutter 510 includes a first cutting table 530 coupled to a first substrate 520. The first cutting table 530 is formed and fabricated similarly to the cutting table 445 (Figure 4). The first cutting table 530 includes a first surface 532, a second surface 534, and a cutting table sidewall 536 extending from the perimeter of the first surface 532 to the perimeter of the second surface 534. According to certain exemplary embodiments, the first surface 532 is substantially planar; however, in other exemplary embodiments, the first surface 532 is non-planar. According to certain exemplary embodiments, the second surface 534 is non-planar; however, in other exemplary embodiments, the second surface 534 is substantially planar. In certain exemplary embodiments, the second surface 534 includes a recess 538 formed therein, thereby also forming a protrusion area 539 extending circumferentially around the recess 538. The recess 538 is circularly shaped and includes a recess diameter 540 that is less than the a second surface diameter 541. Alternatively, the recess 538 is shaped differently in other exemplary embodiments. According to some exemplary embodiments, the recess 538 is about 0.02 inches deep, but recess 538 is deeper or shallower in other exemplary embodiments. The recess 538 is formed by removing a portion of the cutting table 530 using techniques known in the industry, such as plunge EDM, wire EDM, or laser cutting. The objective of the material removal is to create an annular surface which will be the actual working surface during the test. The smaller contact area, or protrusion area 539, makes it possible to reach higher contact pressures, or loads 420, 470 (Figure 4), and even more importantly to limit the range of peripheral velocities which will be experienced by the sliding cutting table 530.

The first substrate 520 is formed and fabricated similarly to the substrate 435 (Figure 4) and includes a first top surface 522, a first bottom surface 524, and a first substrate sidewall 526 extending from the perimeter of the first top surface 522 to the perimeter of the first bottom surface 524. The first substrate 520 is formed having a substrate diameter 521 substantially similar in size to the second surface diameter 541, but is different in other exemplary embodiments. In certain exemplary embodiments, the first top surface 522 is substantially planar; however, in other exemplary embodiments, the first top surface 522 is non-planar. According to certain exemplary embodiments, the first bottom surface 524 is substantially planar, while in other exemplary embodiments, the first bottom surface 524 is non-planar. The first cutting table's first surface 532 is coupled to, or bonded to, the first substrate's first top surface 522 pursuant to the description provided above, or pursuant to any other method known to persons having ordinary skill in the art and having the benefit of the present disclosure.

The second cutter 550 is fabricated similarly as the first cutter 510 and includes a second cutting table 570 coupled to a second substrate 560. The second cutting table 570 is formed and fabricated similarly to the cutting table 445 (Figure 4). The second cutting table 570 includes a first surface 572, a second surface 574, and a cutting table sidewall 576 extending from the perimeter of the first surface 572 to the perimeter of the second surface 574. According to certain exemplary embodiments, the first surface 572 is substantially planar; however, in other exemplary embodiments, the first surface 572 is non-planar. According to certain exemplary embodiments, the second surface 574 is non-planar; however, in other exemplary embodiments, the second surface 574 is substantially planar. In certain exemplary embodiments, the second surface 574 includes a recess 578 formed therein, thereby also forming a protrusion area 579 extending circumferentially around the recess 578. The recess 578 is circularly shaped and includes a recess diameter 580 that is less than the a second surface diameter 581. Alternatively, the recess 578 is shaped differently in other exemplary embodiments. According to some exemplary embodiments, recess 578 is about 0.02 inches deep, but this recess 578 is deeper or shallower in other exemplary embodiments. According to some exemplary embodiments, the recess diameter 580 of the second cutter 550 is similar in size to the recess diameter 540 of the first cutter 510. According to some exemplary embodiments, the cutting table 570 is fabricated using a different grade of PCD than the grade used in fabricating the cutting table 530. As an example, one cutting table 530 could be engineered to present different degrees of surface roughness affecting the friction coefficient and therefore the heat generation and the shear stresses during the test.

The second substrate 560 is formed and fabricated similarly to the substrate 435 (Figure 4) and includes a top surface 562, a bottom surface 564, and a substrate sidewall 566 extending from the perimeter of the top surface 562 to the perimeter of the bottom surface 564. The second substrate 560 is formed having a substrate diameter 561 substantially similar in size to the second surface diameter 581, but is different in other exemplary embodiments. In certain exemplary embodiments, the top surface 562 is substantially planar; however, in other exemplary embodiments, the top surface 562 is non-planar. According to certain exemplary embodiments, the bottom surface 564 is substantially planar, while in other exemplary embodiments, the bottom surface 564 is non-planar. The second cutting table's first surface 572 is coupled to, or bonded to, the second substrate's top surface 562 pursuant to the description provided above, or pursuant to any other method known to persons having ordinary skill in the art and having the benefit of the present disclosure.

Once the first cutter 510 and the second cutter 550 are properly oriented for performing the wear resistance test described herein, the first cutter's second surface 534 is positioned in contact with the second cutter's second surface 574 where the first cutter's recess 538 is substantially aligned with the second cutter's recess 578. According to certain exemplary embodiments, the first cutter's second surface diameter 541 is substantially the same size as the second cutter's second surface diameter 581, both of which are aligned with one another. However, in other exemplary embodiments, the recesses 538, 578 and/or the second surface diameters 541, 581 are not aligned with one another. Further, in certain exemplary embodiments, the recesses 538, 578 and/or the second surface diameters 541, 581 are sized differently from one another. In certain exemplary embodiments, one or more thermocouples 599 are coupled to at least one of the substrates 520, 560 so that the temperature profile is determinable during the test, thereby allowing the temperature at the interface between the first cutter's second surface 534 and the second cutter's second surface 574 to be calculated.

Figure 6 is a cross-sectional view depicting the relationship of a first cutter 610 in contact with the second cutter 550 when inserted into the abrasion testing device 400 (Figure 4) in accordance with a third exemplary embodiment. This relationship is similar to the relationship described with respect to Figure 5, except that the first cutter 610 does not include the recess 538 (Figure 5) of the first cutter 510 (Figure 5). Referring to Figure 6, the first cutter 610 includes a first cutting table 630 coupled to a first substrate 620. The first cutting table 630 is formed and fabricated similarly to the cutting table 445 (Figure 4). The first cutting table 630 includes a first surface 632, a second surface 634, and a cutting table sidewall 636 extending from the perimeter of the first surface 632 to the perimeter of the second surface 634. According to certain exemplary embodiments, the first surface 632 is substantially planar; however, in other exemplary embodiments, the first surface 632 is non-planar. According to certain exemplary embodiments, the second surface 634 is substantially planar; however, in other exemplary embodiments, the second surface 634 is non-planar.

The first substrate 620 is formed and fabricated similarly to the substrate 435 (Figure 4) and includes a first top surface 622, a first bottom surface 624, and a first substrate sidewall 626 extending from the perimeter of the first top surface 622 to the perimeter of the first bottom surface 624. The first substrate 620 is formed having a substrate diameter 621 substantially similar in size to a second surface diameter 641, but is different in other exemplary embodiments. In certain exemplary embodiments, the first top surface 622 is substantially planar; however, in other exemplary embodiments, the first top surface 622 is non-planar. According to certain exemplary embodiments, the first bottom surface 624 is substantially planar, while in other exemplary embodiments, the first bottom surface 624 is non-planar. The first cutting table's first surface 632 is coupled to, or bonded to, the first substrate's first top surface 622 pursuant to the description provided above, or pursuant to any other method known to persons having ordinary skill in the art and having the benefit of the present disclosure.

The second cutter 550 has been previously described and is not repeated herein for the sake of brevity. Once the first cutter 610 and the second cutter 550 are properly oriented for performing the wear resistance test described herein, the first cutter's second surface 634 is positioned entirely in contact with the second cutter's second surface 574. According to certain exemplary embodiments, the first cutter's second surface diameter 641 is substantially the same size as the second cutter's second surface diameter 581, both of which are aligned with one another. However, in other exemplary embodiments, the second surface diameters 641, 581 are not aligned with one another. Further, in certain exemplary embodiments, the second surface diameters 641, 581 are sized differently from one another.

Figure 7 is a cross-sectional view depicting the relationship of a first cutter 710 in contact with a second cutter 550 when inserted into the abrasion testing device 400 (Figure 4) in accordance with a fourth exemplary embodiment. This relationship is similar to the relationship described with respect to Figure 6, except that the first cutter 710 is sized having a larger diameter than the diameter of the first cutter 610 (Figure 6). Referring to Figure 7, the first cutter 710 includes a first cutting table 730 coupled to a first substrate 720. The first cutting table 730 is formed and fabricated similarly to the cutting table 445 (Figure 4). The first cutting table 730 includes a first surface 732, a second surface 734, and a cutting table sidewall 736 extending from the perimeter of the first surface 732 to the perimeter of the second surface 734. According to certain exemplary embodiments, the first surface 732 is substantially planar; however, in other exemplary embodiments, the first surface 732 is non-planar. According to certain exemplary embodiments, the second surface 734 is substantially planar; however, in other exemplary embodiments, the second surface 734 is non-planar.

The first substrate 720 is formed and fabricated similarly to the substrate 435 (Figure 4) and includes a first top surface 722, a first bottom surface 724, and a first substrate sidewall 726 extending from the perimeter of the first top surface 722 to the perimeter of the first bottom surface 724. The first substrate 720 is formed having a substrate diameter 721 substantially similar in size to a second surface diameter 741, but is different in other exemplary embodiments. In certain exemplary embodiments, the first top surface 722 is substantially planar; however, in other exemplary embodiments, the first top surface 722 is non-planar. According to certain exemplary embodiments, the first bottom surface 724 is substantially planar, while in other exemplary embodiments, the first bottom surface 724 is non-planar. The first cutting table's first surface 732 is coupled to, or bonded to, the first substrate's first top surface 722 pursuant to the description provided above, or pursuant to any other method known to persons having ordinary skill in the art and having the benefit of the present disclosure.

The second cutter 550 has been previously described and is not repeated herein for the sake of brevity. Once the first cutter 710 and the second cutter 550 are properly oriented for performing the wear resistance test described herein, the second cutter's second surface 634 is positioned entirely in contact with the first cutter's second surface 734. According to certain exemplary embodiments, the second cutter's second surface diameter 741 is larger than the first cutter's second surface diameter 581.

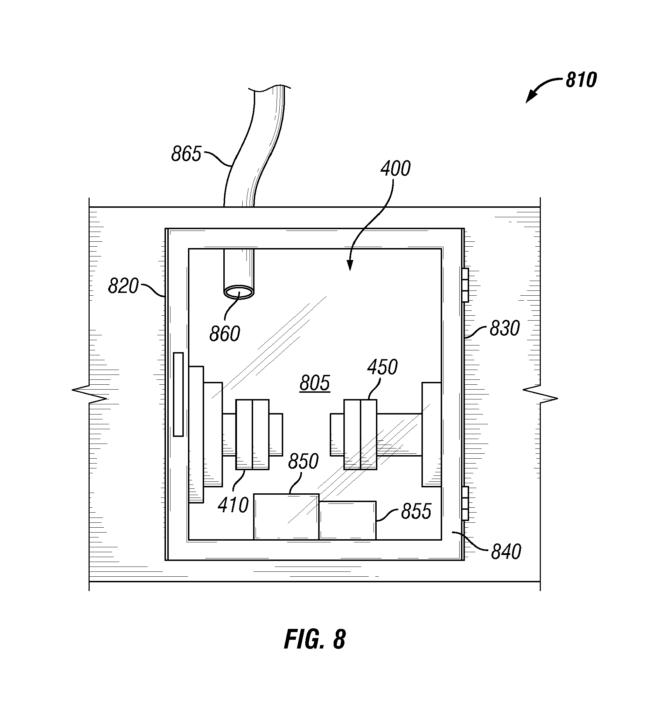

Figure 8 shows a side view of the abrasion testing device 400 positioned at within a control chamber 810 in accordance with an exemplary embodiment of the present invention. The control chamber 810 includes a first wall 820, a second wall 830 positioned opposite the first wall 820, and a door 840 extending from an edge of the first wall 820 to an edge of the second wall 830. The door 840 opens and closes, either by pivoting about the edge of one of the walls 820, 830, or sliding horizontally, to provide access to the abrasion testing device 400. The control chamber 810 is substantially cube-shaped and defines a cavity 805 formed therein. The control chamber 810 is air-tight when the door 840 is closed according to some exemplary embodiments. However, in other exemplary embodiments, the control chamber 810 is not air-tight when the door 840 is closed.

The environment within the cavity 805 is controllable in certain exemplary embodiments. For example, a heater 850 is optionally positioned within the cavity 805 to allow the wear resistance testing process to occur at an elevated temperature when compared to ambient temperature. The heater 850 preheats the first cutter 430 (Figure 4) and the second cutter 480 (Figure 4) prior to their testing via spin, or rotation, thereby reducing the potential for thermal shock. Alternatively, a cooler 855 is optionally positioned within the cavity 805 to allow the wear resistance testing process to occur at a lower temperature when compared to ambient temperature. In another example, the control chamber 810 includes an air opening 860 which is coupled to an air hose 865 for controlling the pressure within the control chamber 810 or the composition of the gas within the control chamber 810. Air, or some other gas, such as an inert gas, enters into the cavity 805 to increase the pressure therein. A compressor (not shown) is coupled to one end of the air hose 865 and used to push the air, or gas, into the cavity 805 according to some exemplary embodiments. Alternatively, the pressure within the cavity 805 is in a vacuum state or less than atmospheric pressure, in which the air, or gas, is withdrawn from within the cavity 805 through the air opening 860 and the air hose 865. Thus, the temperature and pressure is controllable within the control chamber 810 and therefore the wear resistance testing process is performable within any combination of desired temperature and desired pressure.

As previously mentioned, the abrasion testing device 400 includes the first holder 410 and the second holder 450. The first holder 410 is rotatably coupled to the first wall 820, while the second holder 450 is rotatably coupled to the second wall 830. However, in other exemplary embodiments, one or more of the first holder 410 and the second holder 450 are entirely positioned within the cavity 805 and are not coupled to either of the first wall 820 or the second wall 830. The rotation and/or the load applied to any one of the first holder 410 and/or the second holder 450, which is positioned at least partially within the control chamber 810 is known to persons having ordinary skill in the art having the benefit of the present disclosure. For example, one or more seals (not shown) can be used where the holders 410, 450 are in contact with the control chamber 810 to maintain an air-tight control chamber 810. In certain exemplary embodiments, one or more steps in the wear resistance testing process, such as pressure control and/or temperature control, are controlled and operated by a computer (not shown).

Exemplary embodiments allow to test PCD cutters under a wide range of temperatures and applied shear stresses in a limited time and at lower cost than the traditional VTL and granite log based tests. Furthermore, it is possible to reach much higher relative speeds and power levels in a consistent and safe manner. Measuring temperature, loads, angular speeds, and axial displacement provides valuable data for users to better understand the wear mechanics of advanced PCD materials or other superhard materials.

Although each exemplary embodiment has been described in detail, it is to be construed that any features and modifications that are applicable to one embodiment are also applicable to the other embodiments. Furthermore, although the invention has been described with reference to specific embodiments, these descriptions are not meant to be construed in a limiting sense. Various modifications of the disclosed embodiments, as well as alternative embodiments of the invention will become apparent to persons of ordinary skill in the art upon reference to the description of the exemplary embodiments. It should be appreciated by those of ordinary skill in the art that the conception and the specific embodiments disclosed may be readily utilized as a basis for modifying or designing other structures or methods for carrying out the same purposes of the invention. It should also be realized by those of ordinary skill in the art that such equivalent constructions do not depart from the spirit and scope of the invention as set forth in the appended claims. It is therefore, contemplated that the claims will cover any such modifications or embodiments that fall within the scope of the invention.

## Claims

1. A method for performing a wear resistance test of a cutter, the method comprising:
obtaining a first cutter comprising a bottom surface at one end and a cutting surface at an opposing end;
obtaining a superhard material comprising a superhard surface;
positioning at least a portion of the cutting surface adjacent to the superhard surface, the cutting surface being in contact with the superhard surface at an area of contact;
rotating at least one of the first cutter and the superhard material producing a rotational differential between the first cutter and the superhard material;
allowing the superhard surface to remove a portion of the cutting surface; and
determining an amount of cutting surface that is removed,
wherein the area of contact is substantially the same throughout the test.

2. The method of Claim 1, wherein the cutting surface and the superhard surface are substantially planar.

3. The method of Claim 1, wherein only the superhard material is rotated.

4. The method of Claim 1, wherein only the first cutter is rotated.

5. The method of Claim 1, wherein the superhard material is rotated in one direction and the first cutter is rotated in an opposite direction.

6. The method of Claim 1, wherein the superhard material and the first cutter are rotated in the same direction, and wherein the superhard material is rotated at a different speed than the first.

7. The method of Claim 1, wherein the rotational differential ranges from between about 200 RPM to about 7,000 RPM.

8. The method of Claim 1, wherein the first cutter comprises:
a first substrate comprising the bottom surface, a top surface, and a substrate sidewall extending from the perimeter of the bottom surface to the perimeter of the top surface; and
a first cutting table comprising a first surface, the cutting surface, and a cutting table sidewall extending from the perimeter of the first surface to the perimeter of the cutting surface, the first surface of the first cutting table being coupled to the top surface of the first substrate.

9. The method of Claim 8, wherein the first cutting table comprises at least one of a polycrystalline diamond and a cubic boron nitride.

10. The method of Claim 1, wherein the superhard material comprises a second cutter, the second cutter comprising:
a second substrate comprising a bottom surface, a top surface, and a substrate sidewall extending from the perimeter of the bottom surface to the perimeter of the top surface; and
a second cutting table comprising a first surface, the superhard surface, and a cutting table sidewall extending from the perimeter of the first surface to the perimeter of the superhard surface, the first surface of the second cutting table being coupled to the top surface of the second substrate.

11. The method of Claim 10, wherein the second cutting table comprises at least one of a polycrystalline diamond and a cubic boron nitride.

12. The method of Claim 1, further comprising determining an amount of time taken to remove the amount of cutting surface.

13. The method of Claim 1, further comprising applying a first load on the superhard material in a direction towards the first cutter.

14. The method of Claim 1, further comprising applying a second load on the first cutter in a direction towards the superhard material.

15. The method of Claim 1, further comprising applying a first load on the superhard material in a direction towards the first cutter and applying a second load on the first cutter in a direction towards the superhard material.

16. The method of Claim 1, wherein the cutting surface defines a recess formed therein and comprises a protrusion area formed about the perimeter of the cutting surface and surrounding the recess.

17. The method of Claim 1, wherein the superhard surface defines a recess formed therein and comprises a protrusion area formed about the perimeter of the superhard surface and surrounding the recess.

18. The method of Claim 19, wherein the diameter of the superhard surface is larger than the diameter of the cutting surface.

19. The method of Claim 1, further comprising:
monitoring an interface temperature located at the area of contact;
monitoring the rotational differential between the first cutter and the superhard material; and
monitoring a load differential between a first load being applied on the superhard material in a direction towards the first cutter and a second load applied on the first cutter in a direction towards the superhard material.

20. The method of Claim 19, wherein at least one of the interface temperature, the rotational differential, and the load differential is maintained substantially constant throughout at least a portion of the test.

21. An apparatus for performing a wear resistance test of a cutter, comprising
a first holder;
a first cutter comprising a bottom surface at one end and a cutting surface at an opposing end, the bottom surface being coupled to the first holder;
a second holder; and
a superhard material comprising a superhard surface at one end and a first surface at an opposing end, the first surface being coupled to the second holder,
wherein at least a portion of the cutting surface is contacting at least a portion of the superhard surface at an area of contact, the area of contact being substantially the same throughout the test, and
wherein at least one of the first holder and the second holder is rotatable.

22. The apparatus of Claim 21, wherein the first holder defines a cavity formed therein, at least a portion of the first cutter being inserted into the cavity.

23. The apparatus of Claim 21, wherein the second holder defines a cavity formed therein, at least a portion of the superhard material being inserted into the cavity.

24. The apparatus of Claim 21, further comprising a control chamber, the control chamber comprising a first wall, a second wall, a door extending from the edge of the first wall to the edge of the second wall, and an enclosed area defined by at least the first wall, the second wall, and the door, wherein at least a portion of the first holder is coupled to the first wall, at least a portion second holder is coupled to the second wall, and at least a portion of the first holder and the second holder are housed within the enclosed area.

25. The apparatus of Claim 24, wherein the environment of the enclosed area is controllable.

26. The apparatus of Claim 25, wherein the environment comprises at least one of the temperature and the pressure.
